# EUROPEAN PATENT APPLICATION

(11) **EP 4 636 587 A1**
(43) Date of publication of application: **22.10.2025**
(21) Application number: 23910765.9
(22) Date of filing: 27.12.2023
(51) Int. Cl.: G06F 9/455

(54) **METHOD AND APPARATUS FOR MIGRATING VIRTUAL MACHINE, AND DEVICE AND STORAGE MEDIUM**

(30) Priority: 29.12.2022 CN 202211711327
(71) Applicant: Huawei Cloud Computing Technologies Co., Ltd., Guiyang, Guizhou 550025 (CN)
(72) Inventor: YE, Chuan, Guiyang, Guizhou 550025 (CN)
(74) Representative: Epping - Hermann - Fischer
(86) International application number: PCT/CN2023/142484
(87) International publication number: WO 2024/140847

(57) **Abstract**

This application provides a method and apparatus for migrating a virtual machine, a device, a storage medium, and a program product, and relates to the field of computers. The method includes: receiving, at a target device, status information of a source virtual machine from a source device. The method further includes: obtaining an address mapping corresponding to the source virtual machine. The address mapping includes a mapping between a virtual address of the source virtual machine and a physical address of the source virtual machine. The method further includes: implementing, based on the status information and the address mapping, virtual machine migration by running, at the target device, a target virtual machine that accesses the physical address. According to embodiments of this application, virtual machine live migration can be accelerated, an amount of data that needs to be migrated during virtual machine migration is reduced, reliability of live migration is improved, and user experience is improved.

## Description

### CROSS-REFERENCE TO RELATED APPLICATIONS

This application claims priority to Chinese Invention Patent Application No. 202211711327.0, filed on December 29, 2022 and entitled "METHOD AND APPARATUS FOR MIGRATING VIRTUAL MACHINE, DEVICE, AND STORAGE MEDIUM", which is incorporated herein by reference in its entirety.

### TECHNICAL FIELD

Embodiments of this application mainly relate to the field of computers. More specifically, embodiments of this application relate to a method and apparatus for migrating a virtual machine, a device, and a storage medium.

### BACKGROUND

With development of computer technologies, more hardware devices are needed to provide services for various operating systems and applications of users. However, deployment of most operating systems and applications uses only a small quantity of physical resources. If an independent physical device is set for each operating system or application, a large quantity of resources are wasted. To reduce waste of hardware resources, a virtualization technology begins to emerge, and virtual machines are set to provide the services for the users. In this case, a plurality of virtual machines can share same hardware resources, which improves hardware utilization.

A live migration technology emerges together with the virtualization technology. The virtual machine can be migrated through live migration from one server to another without shutting down the virtual machine and without awareness of the user. The live migration technology is widely used in an operation and maintenance scenario such as load balancing of server cluster resources or a server upgrade. However, many problems that need to be resolved still exists in a virtual machine live migration process.

### SUMMARY

Embodiments of this application provide a solution for migrating a virtual machine.

According to a first aspect of this application, a method for migrating a virtual machine is provided. The method includes: receiving, at a target device, status information of a source virtual machine from a source device; obtaining an address mapping corresponding to the source virtual machine, where the address mapping includes a mapping between a virtual address of the source virtual machine and a physical address of the source virtual machine; and implementing, based on the status information and the address mapping, virtual machine migration by running, at the target device, a target virtual machine that accesses the physical address.

In this manner, in a virtual machine live migration process, only the status information of the virtual machine needs to be transferred, and memory data of the virtual machine does not need to be transferred. This operation does not generate a dirty page, accelerates virtual machine live migration, and reduces an amount of data to be migrated during virtual machine migration, which achieves second-level live migration. In addition, because migration time is significantly reduced, interruption time is significantly reduced, thereby improving reliability of live migration and improving user experience.

In some embodiments, the status information includes at least one of the following: register data of a central processing unit, virtual machine configuration information, or a physical core corresponding to the virtual machine. In this manner, the target virtual machine can quickly and accurately obtain information about a virtual machine to be migrated.

In some embodiments, obtaining the address mapping includes: receiving the address mapping from the source device; or searching for, at the target device, the address mapping corresponding to the source virtual machine. In this manner, the target virtual machine can quickly access the physical address of the source virtual machine, thereby avoiding migration of the memory data in a virtual machine migration process.

In some embodiments, running the target virtual machine includes: loading the status information to the target virtual machine; determining the virtual address accessed by the target virtual machine; and accessing, based on the address mapping, the physical address corresponding to the virtual address. In this manner, fast and accurate access to the physical address corresponding to the virtual address can be implemented.

In some embodiments, a communication bus between a device cluster of the source device and a device cluster of the target device supports unified addressing between devices. Accessing the physical address includes: determining whether the physical address is a local address of the target device; and if the physical address is the local address, locally accessing the physical address; and if the physical address is not the local address, remotely accessing the physical address through the communication bus that supports unified addressing between the devices. In this manner, the target virtual machine can quickly access the physical address of the source virtual machine, so that the memory data of the virtual machine does not need to be migrated in a virtual machine migration process.

In some embodiments, the address mapping is a first address mapping, and the physical address in the first address mapping is a source reference physical address of the source device. A communication bus between a device cluster of the source device and a device cluster of the target device does not support unified addressing between devices, or the physical address is located in a storage pool, and the storage pool does not support shared access of the source device and the target device. Accessing the physical address includes: obtaining a second address mapping between an actual physical address of the source virtual machine and the source reference physical address; determining a third address mapping between a target reference physical address of the target device for the target virtual machine and the actual physical address; determining, based on the second address mapping and the third address mapping, a fourth address mapping between the source reference physical address and the target reference physical address; and updating the first address mapping based on the fourth address mapping by replacing the source reference physical address in the first address mapping with the target reference physical address; and determining, based on an updated first address mapping, the target reference physical address corresponding to the virtual address. In this manner, when the communication bus between the device cluster of the source device and the device cluster of the target device does not support unified addressing between the devices, or the physical address is located in the storage pool that does not support shared access of the source device and the target device, access to the physical address can also be implemented only through high-speed address mapping, to reduce data to be migrated.

In some embodiments, when the communication bus between the device cluster of the source device and the device cluster of the target device does not support unified addressing between the devices, accessing the physical address further includes: determining whether the target reference physical address is a local physical address of the target device; and if the target reference physical address is the local physical address, locally accessing the target reference physical address. In this manner, quick access to the local physical address can be implemented.

In some embodiments, accessing the physical address further includes: if the target reference physical address is not the local physical address, determining, based on the third address mapping, an actual physical address corresponding to the target reference physical address; and remotely accessing the actual physical address through the communication bus that does not support unified addressing between the devices. In this manner, a physical address on a remote device can be quickly accessed, thereby avoiding migration of the memory data in a virtual machine migration process.

In some embodiments, the bus includes either of the following: a bus that supports a compute express link protocol or a bus that supports a remote direct memory access protocol. In this manner, quick access to remote memory data can be implemented, and connection interruption and network congestion can be avoided.

In some embodiments, when the physical address is located in the storage pool, accessing the physical address further includes: determining, based on the third address mapping, an actual physical address corresponding to the target reference physical address; and accessing the actual physical address located in the storage pool. In this manner, when a storage pool of a device does not support shared access, correct access to storage pool space can also be implemented through high-speed address mapping.

In some embodiments, the physical address is located in at least one of the following devices: the source device, the target device, a third device in the device cluster that includes the source device and the target device, or a storage pool of the source device and the target device. In this manner, a range of storage space of the memory for the virtual machine is expanded.

In some embodiments, the status information is first status information, and the method further includes: if a request for migrating the target virtual machine to a fourth device is received, collecting second status information of the target virtual machine; and sending the second status information to the fourth device. In this manner, virtual machine migration can be quickly implemented.

In some embodiments, the method further includes: obtaining a fifth address mapping corresponding to the target virtual machine, where the fifth address mapping includes a mapping between a virtual address of the target virtual machine and a physical address of the target virtual machine; and sending the fifth address mapping to the fourth device. In this manner, a device that receives a virtual machine to be migrated can implement fast and accurate access to the physical address.

In some embodiments, the method further includes: if an instruction indicating that the corresponding virtual machine is running is received from the fourth device, stopping running of the target virtual machine. In this manner, virtual machine live migration is quickly completed.

According to a second aspect of this application, an apparatus for migrating a virtual machine is provided. The apparatus includes: a status information receiving unit, configured to receive, at a target device, status information of a source virtual machine from a source device; an address mapping obtaining unit, configured to obtain an address mapping corresponding to the source virtual machine, where the address mapping includes a mapping between a virtual address of the source virtual machine and a physical address of the source virtual machine; and a running unit, configured to implement, based on the status information and the address mapping, virtual machine migration by running, at the target device, a target virtual machine that accesses the physical address.

According to a third aspect of this application, an electronic device is further provided, including: at least one computing unit; and at least one memory that is coupled to the at least one computing unit and that stores instructions for execution by the at least one computing unit, where when the instructions are executed by the at least one computing unit, the device is enabled to perform the method according to the first aspect of this application.

According to a fourth aspect of this application, a computer-readable storage medium is further provided, storing a computer program, where when the program is executed by a processor, the method according to the first aspect of this application is implemented.

According to a fifth aspect of this application, a computer program product is further provided, including computer-executable instructions, where when the computer executable instructions are executed by a processor, the method according to the first aspect of this application is implemented.

It may be understood that the apparatus according to the second aspect, the electronic device according to the third aspect, the computer-readable storage medium according to the fourth aspect, or the computer program product according to the fifth aspect is configured to perform the method according to the first aspect. Therefore, explanations or descriptions of the first aspect are also applicable to the second aspect, the third aspect, the fourth aspect, and the fifth aspect. In addition, for beneficial effects that can be achieved in the second aspect, the third aspect, the fourth aspect, and the fifth aspect, refer to the beneficial effects in the corresponding method. Details are not described herein again.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1 is a diagram of an example environment in which a plurality of embodiments of this application can be implemented;
FIG. 2A to FIG. 2C are diagrams of virtual machine live migration according to some embodiments of this application;
FIG. 3 is a diagram of example deployment of a virtual machine cluster memory allocator according to some embodiments of this application;
FIG. 4 is a diagram of example deployment of a virtual machine cluster memory allocator according to some embodiments of this application;
FIG. 5 is a schematic flowchart of virtual machine migration according to some embodiments of this application;
FIG. 6A and FIG. 6B are diagrams of an example of virtual machine migration according to some embodiments of this application;
FIG. 7A and FIG. 7B are diagrams of another example of virtual machine migration according to some embodiments of this application;
FIG. 8 is a block diagram of an apparatus according to some embodiments of this application; and
FIG. 9 is a block diagram of a computing device that can implement a plurality of embodiments of this application.

### DESCRIPTION OF EMBODIMENTS

The following describes embodiments of this application in detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that the accompanying drawings and embodiments of this application are only used as examples, but are not intended to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As described above, in some cases, a virtual machine needs to be migrated between computing devices in a computing device cluster, for example, to implement load balancing of server cluster resources or implement a server upgrade. However, due to server architecture limitations, the virtual machine runs in a single computing device. To ensure that the virtual machine does not stop working, live migration is usually performed on the virtual machine. Virtual machine live migration is usually performed by iteratively copying memory to migrate all memory data of the virtual machine. This process is limited by bandwidth between servers and a change in a virtual machine memory page difference in a migration process. As a result, overall live migration duration is uncontrollable, and a problem that the migration may fail for a long time also easily occurs.

For example, in some conventional solutions of virtual machine live migration, after virtual machine live migration is triggered, a target device immediately starts the virtual machine, and in this process, memory data is continuously copied from a source device to the target device in sequence. Herein, a full copy needs to be completed only once, and a problem of a dirty (dirty) page does not need to be considered. Because the virtual machine already runs on the target device, all dirty pages are directly written to memory ofthe target device. Because the memory data of the virtual machine on the target device is incomplete, once a memory page that a user needs to access has not been copied from the source device, a remote memory access mechanism is triggered, and the user is allowed to access the memory page after the memory data is copied from the source device to the target device. In this case, the virtual machine is in a suspended state throughout the process, and a network delay directly determines a memory access delay. However, the conventional solution for virtual machine live migration has the following problems: Once the network is intermittently disconnected or interrupted, because the memory page of the virtual machine is not completely copied, a problem of suspension or even abnormal virtual machine restart may occur when the user accesses the memory. In addition, if the memory page is not copied when the user accesses the memory, the memory page needs to be asynchronously obtained from the source device before being accessed. A delay of an existing network technology is at least in microseconds, which affects some delay-sensitive applications.

To resolve at least some of the foregoing problems and other potential problems, in embodiments of this application, the source device sends status information of a running source virtual machine to the target device. After receiving, at the target device, the status information of the source virtual machine, the target device further obtains an address mapping corresponding to the source virtual machine. The address mapping includes a mapping between a virtual address of the source virtual machine and a physical address of the source virtual machine. Then, the target device uses the status information and the address mapping to run the target virtual machine that accesses the physical address, thereby implementing virtual machine migration. Based on this manner, in a virtual machine live migration process, only the status information of the virtual machine needs to be transferred, and memory data does not need to be transferred, thereby accelerating virtual machine live migration, and reducing an amount of data that needs to be migrated during virtual machine migration. Because migration time is significantly reduced, reliability of live migration is improved, and user experience is improved.

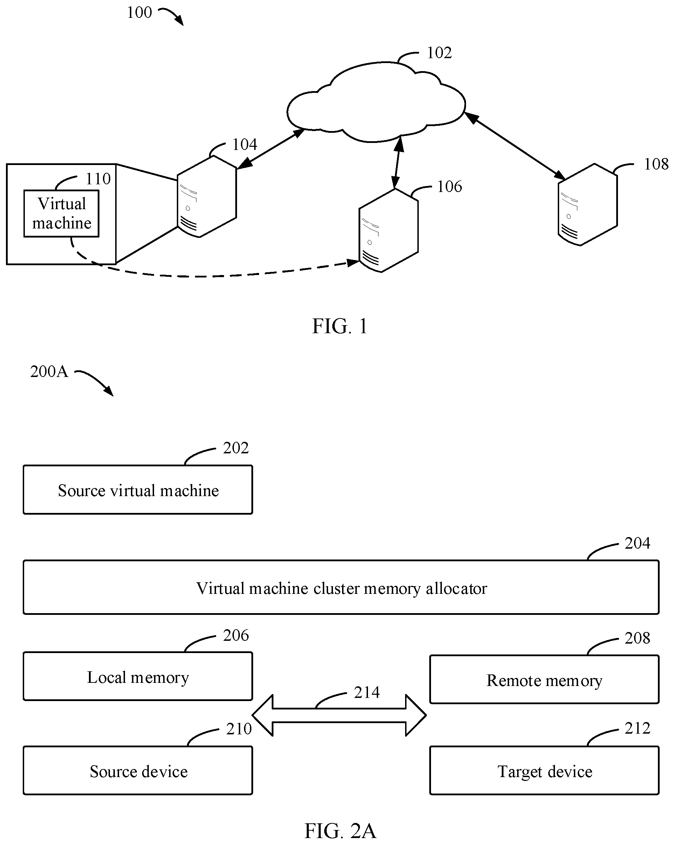

FIG. 1 is a diagram of an example environment 100 in which a plurality of embodiments of this application can be implemented. As shown in FIG. 1, the environment 100 includes a computing device cluster that includes a computing device 104, a computing device 106, and a computing device 108. The computing device cluster shown in FIG. 1 includes three computing devices, which is merely an example, and is not a specific limitation on the present disclosure. The computing device cluster may include any quantity of computing devices.

The computing devices 104, 106, and 108 include but are not limited to personal computers, servers, handheld or laptop devices, mobile devices, multiprocessor systems, consumer electronic products, minicomputers, mainframe computers, distributed computing environments including any one of the foregoing systems or devices, and the like.

The computing device 104, the computing device 106, and the computing device 108 in the computing device cluster may be used for a virtual machine to run. For example, a virtual machine 110 runs on the computing device 104. The virtual machine running in the computing device cluster may execute any suitable operating system or application.

In FIG. 1, the computing device cluster that includes the computing device 104, the computing device 106, and the computing device 108 is connected by a network 102. In an example, the network 102 is a network that includes a high-speed communication bus, for example, a bus that supports a compute express link (Compute Express Link, CXL) protocol, or a bus that supports a remote direct memory access (Remote Direct Memory Access, RDMA) protocol. The foregoing example is merely used to describe the present disclosure, but is not a specific limitation on the present disclosure. Devices in the computing device cluster may be directly interconnected through a high-speed communication bus.

One or more virtual machines, for example, the virtual machine 110, run on the computing device 104. When the virtual machine on the computing device 104 is migrated to another computing device, the computing device 104 may also be referred to as a source device. In an example, a physical address corresponding to a virtual address of virtual memory of the virtual machine 110 may be located on the computing device 104. In another example, a part of the physical address corresponding to the virtual address of the virtual memory of the virtual machine 110 may be located on the computing device 104, and the other part may be located on the computing device 106. In still another example, the physical address corresponding to the virtual address of the virtual memory of the virtual machine 110 may be located on the computing device 108 or located in a storage pool of the computing device cluster. The foregoing example is merely used to describe the present disclosure, but is not a specific limitation on the present disclosure.

The virtual machine 110 may be migrated to another computing device, for example, the computing device 106. A computing device to which the virtual machine is to be migrated may also be referred to as a target device. When the virtual machine 110 is migrated, the computing device 104 collects status information of the virtual machine 110. Then, the computing device 104 sends the status information of the virtual machine 110 in the computing device 104 to the computing device 106, and then a target virtual machine created on the computing device 106 loads the status information. The target virtual machine that loads the status information may directly access, through the high-speed communication bus, the physical address corresponding to the virtual address of the virtual machine 110 without migrating memory data of the virtual machine, thereby implementing virtual machine live migration.

In the foregoing manner, in a virtual machine live migration process, only the status information of the virtual machine needs to be transferred, and memory data does not need to be transferred, thereby accelerating virtual machine live migration, and reducing an amount of data that needs to be migrated during virtual machine migration. In addition, because migration time is significantly reduced, reliability of live migration is improved.

The foregoing describes, with reference to FIG. 1, a diagram of the example environment 100 in which embodiments of this application can be implemented. The following describes, with reference to FIG. 2A to FIG. 2C, diagrams of virtual machine migration according to some embodiments of this application.

As shown in FIG. 2A, a source virtual machine 202 runs on a source device 210, and the source virtual machine 202 needs to be migrated to a target device 212. A virtual machine cluster memory allocator 204 runs on a device cluster that includes the source device 210 and the target device 212. The virtual machine cluster memory allocator 204 is configured to centrally manage memory resources in the device cluster. To manage the memory resources in the device cluster, the virtual machine cluster memory allocator 204 includes at least memory resource allocation information in the cluster and an address mapping between a virtual address of the virtual machine and a physical address of the virtual machine. The memory resource allocation information indicates specific memory resources that have been allocated and specific memory resources that have not been allocated. The address mapping between the virtual address of the virtual machine and the physical address of the virtual machine is used to describe a correspondence between the virtual address and the physical address. For example, when the source virtual machine 202 runs on the source device 210, the memory resource in the device cluster may be allocated to the source virtual machine 202 by using the virtual machine cluster memory allocator 204. Storage space allocated by the virtual machine cluster memory allocator 204 to the source virtual machine may be all located on the source device, partially located on the source device and partially located on the target device, or all located on the target device. The foregoing example is merely used to describe the present disclosure, but is not a specific limitation on the present disclosure. The storage space allocated by the virtual machine cluster memory allocator 204 to the source virtual machine may be all located on another computing device in the device cluster or in a storage pool of the device cluster. The virtual machine cluster memory allocator 204 further determines a mapping relationship between a virtual address of the source virtual machine 202 and a physical address of the source virtual machine 202.

When the source device 210 or the target device 212 includes memory used to store data, the memory on the source device on which the source virtual machine runs is referred to as local memory 206, and the memory on the target device 212 to which the virtual machine 202 is to be migrated is referred to as remote memory 208. The virtual machine cluster memory allocator 204 manages storage space of the local memory 206 and storage space of the remote memory 208. A high-speed communication bus 214 is further included between the source device 210 and the target device 212, so that memory access can be directly implemented between devices.

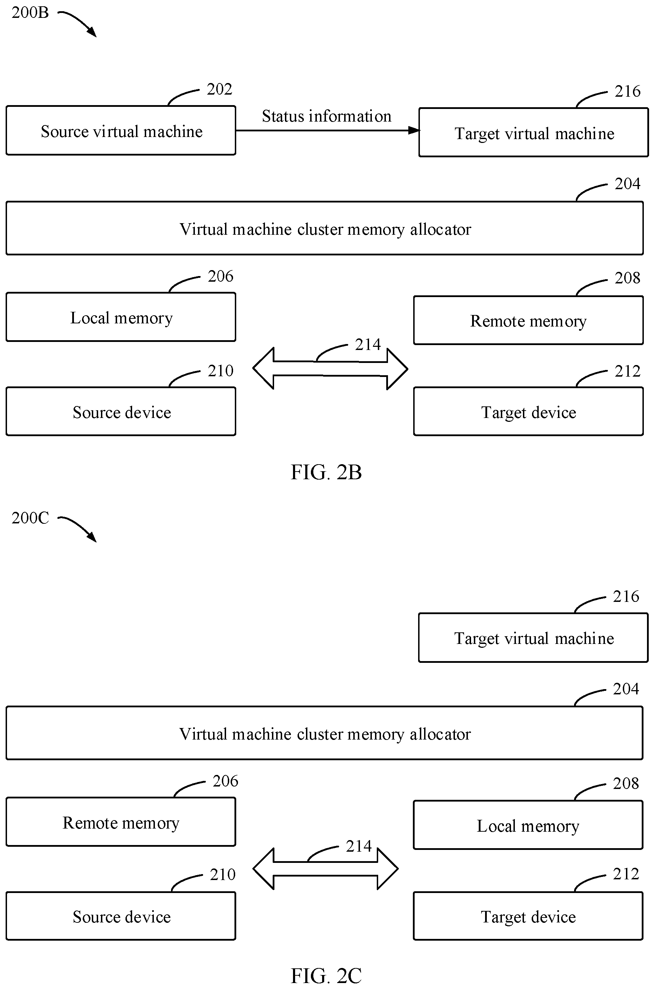

As shown in FIG. 2B, the source virtual machine 202 is migrated from the source device 210 to the target device 212. When the source virtual machine 202 is migrated, status information of the source virtual machine 202 on the source device 210 needs to be collected. The status information collected on the source device 210 may include one or more of register data of a central processing unit, virtual machine configuration information, or a physical core and other information corresponding to the virtual machine. The register data of the central processing unit may include data related to an operation performed in a virtual running process. The virtual machine configuration information may be information related to a configuration of the virtual machine, for example, a computing resource and a storage resource of the virtual machine, and a network connecting configuration of the virtual machine. The physical core corresponding to the virtual machine includes a quantity of physical cores that need to correspond to the virtual machine, and the like. The foregoing information is merely used to describe the present disclosure, but is not a specific limitation on the present disclosure. Then, the source device 210 sends the status information of the source virtual machine 202 to the target device 212. A target virtual machine 216 created at the target device 212 loads the status information.

As shown in FIG. 2C, after the status information is loaded, a status of the target virtual machine 216 is the same as that of the source virtual machine 202. Because a location of the virtual machine changes, the virtual machine cluster memory allocator 204 needs to adjust the memory on the target device on which the target virtual machine 216 runs to the local memory, and adjust the memory on the source device 210 to the remote memory. Then, the physical address of the source virtual machine 202 may be accessed through the high-speed bus, and memory data of the source virtual machine does not need to be migrated.

Through this method, according to embodiments of this application, virtual machine live migration can be accelerated, an amount of data that needs to be migrated during virtual machine migration is reduced, reliability of live migration is improved, and user experience is improved.

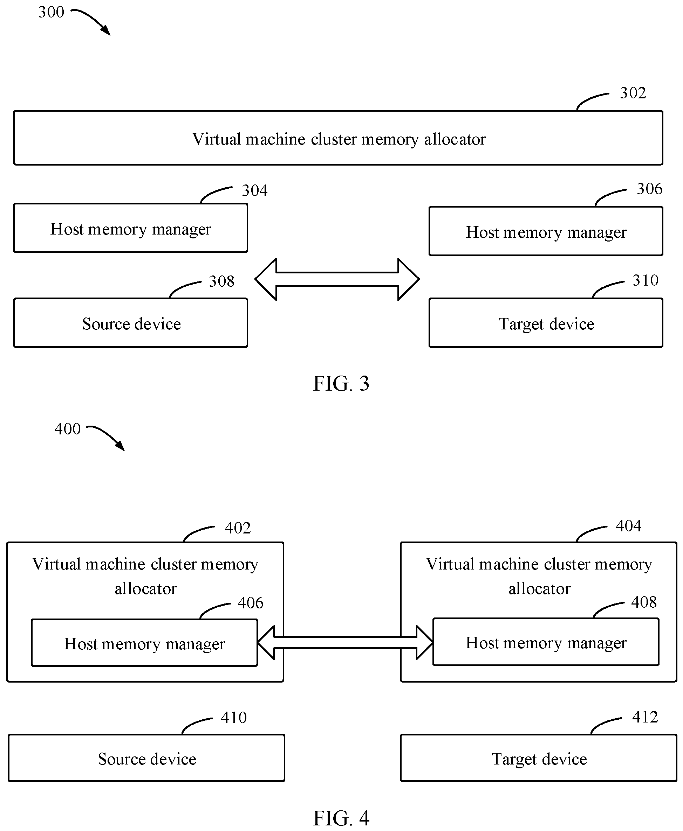

The foregoing describes, with reference to FIG. 2A to FIG. 2C, diagrams of virtual machine live migration according to some embodiments of this application. The following describes, with reference to FIG. 3 and FIG. 4, deployment of a virtual machine cluster memory allocator. FIG. 3 is a diagram of example deployment 300 of the virtual machine cluster memory allocator according to some embodiments of this application. FIG. 4 is a diagram of example deployment 400 of the virtual machine cluster memory allocator according to some embodiments of this application.

In FIG. 3, a virtual machine cluster memory allocator 302 is deployed in a centralized manner, and centrally manages memory of the source device 308 and memory of the target device 310. In an example, the virtual machine cluster memory allocator 302 may be deployed on a source device 308. In another example, the virtual machine cluster memory allocator 302 is deployed on a target device 310. In still another example, the virtual machine cluster memory allocator 302 is deployed on another computing device. To facilitate use of the virtual machine cluster memory allocator 302, when the virtual machine runs on the source device or the target device, a host memory manager may obtain an address mapping table that is for the virtual machine and that is generated by the virtual machine cluster memory allocator 302. The address mapping table is used to implement translation from a virtual address to a physical address on a host memory manager 304 or a host memory manager 306. For example, when the source virtual machine is generated on the source device 308, the virtual machine cluster memory allocator 302 loads an address mapping between a virtual address of the source virtual machine and a physical address of the source virtual machine to the host memory storage manager 304 of the source device 308.

In FIG. 4, a virtual machine cluster memory allocator 402 is deployed on a computing device in the device cluster in a distributed manner, for example, deployed on a source device 410 and a target device 412 in a distributed manner. The virtual machine cluster memory allocator 402 and a host storage manager 406 are co-deployed on a source device 410, and a virtual machine cluster memory allocator 404 and a host storage manager 408 are co-deployed on the target device 412. The virtual machine cluster memory allocator 402 located on the source device 410 and the virtual machine cluster memory allocator 404 located on the target device 412 perform data synchronization, to ensure that each virtual machine cluster memory allocator stores same data.

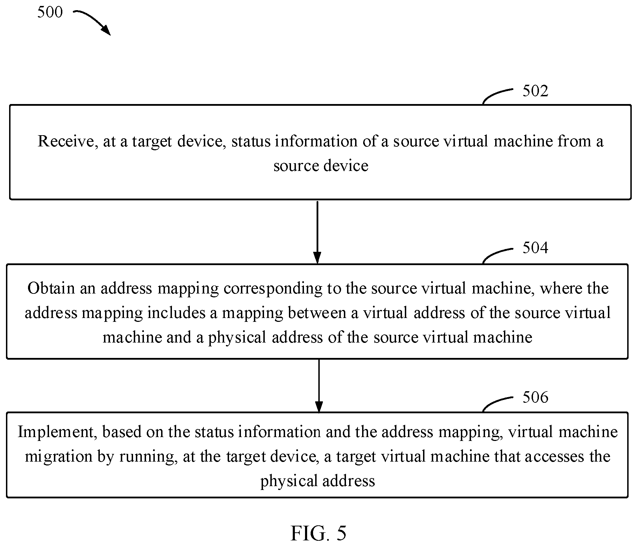

The foregoing describes, with reference to FIG. 3 and FIG. 4, deployment examples of the virtual machine cluster memory allocators according to some embodiments of this application. The following describes, with reference to FIG. 5, a virtual machine migration process. FIG. 5 is a schematic flowchart of virtual machine migration according to some embodiments of this application. The method shown in FIG. 5 may be performed by the computing device 106 in FIG. 1 or any suitable computing device.

At a block 502, the status information of the source virtual machine is received at the target device from the source device. For example, when the virtual machine 110 is migrated from the source device 104 to the target device 106, the status information of the virtual machine 110 needs to be collected at the source device 104, and then the status information is sent to the target device 106.

At a block 504, an address mapping corresponding to the source virtual machine is obtained. The address mapping includes the mapping between the virtual address of the source virtual machine and the physical address of the source virtual machine. To implement virtual machine migration, the target device 106 further needs to obtain the address mapping corresponding to the source virtual machine, so that the target device may use the address mapping to access the physical address of the source virtual machine.

In some embodiments, the target device 106 receives the address mapping from the source device 104. For example, in a solution in which the virtual machine cluster memory allocator is deployed in a centralized manner, when a virtual machine is established, the virtual machine cluster memory allocator stores the address mapping of the source virtual machine, and sends the address mapping to the source device. When sending the status information to the target device, the source device may further send the address mapping of the source virtual machine to the target device. Optionally, the target device may obtain the address mapping of the source virtual machine from the virtual machine cluster memory allocator. In this manner, the target virtual machine can quickly access the physical address of the source virtual machine, thereby avoiding migration of the memory data in a virtual machine migration process.

In some embodiments, the target device searches for, at the target device, the address mapping corresponding to the source virtual machine. For example, in a solution in which the virtual machine cluster memory allocator is deployed in a distributed manner, the address mapping of each virtual machine is stored at each device. Therefore, after the virtual machine is migrated to the target device, a mapping relationship corresponding to the source virtual machine may be searched for at the target device. In this manner, the target virtual machine can quickly access the physical address of the source virtual machine, thereby avoiding migration of the memory data in a virtual machine migration process. The foregoing example is merely used to describe the present disclosure, but is not a specific limitation on the present disclosure.

At a block 506, virtual machine migration is implemented, based on the status information and the address mapping, by running, at the target device, the target virtual machine that accesses the physical address. After obtaining the status information and the address mapping, the target device may access the physical address of the source virtual machine by using the obtained information to obtain data corresponding to the source virtual machine, thereby implementing virtual machine live migration.

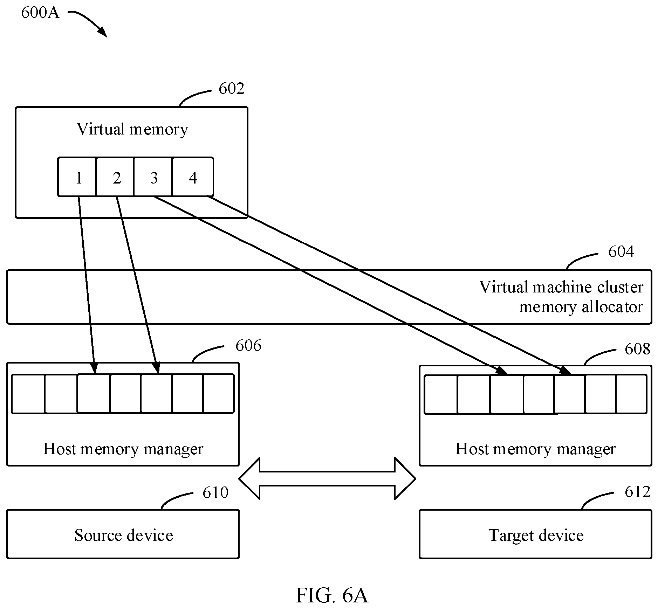

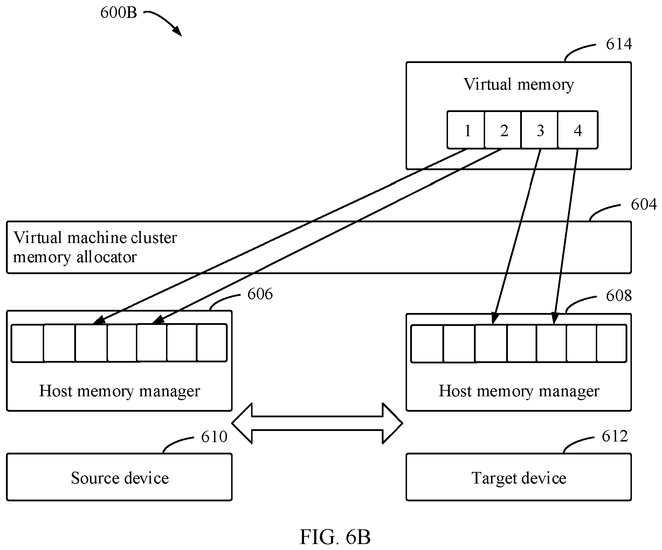

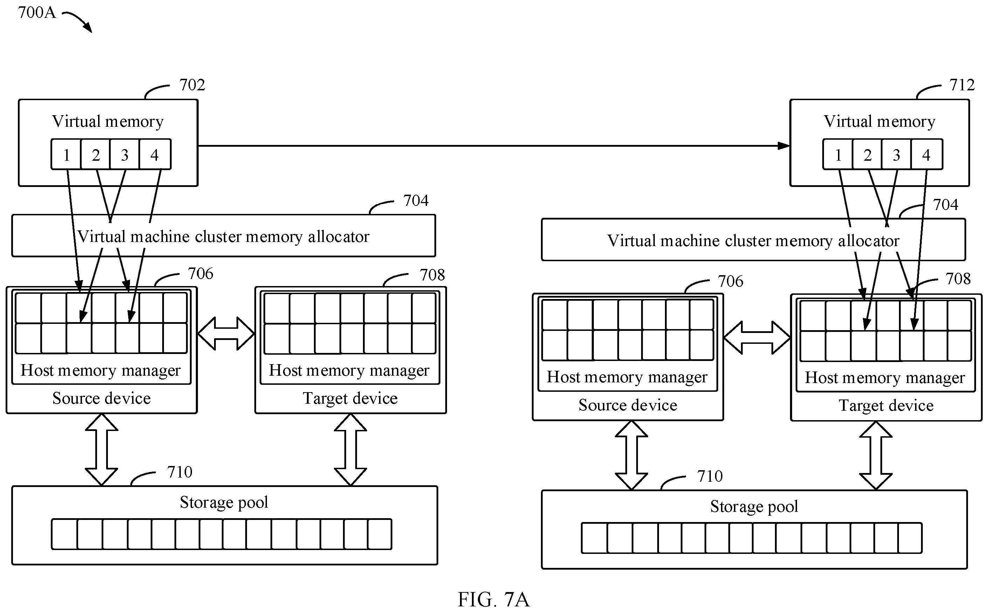

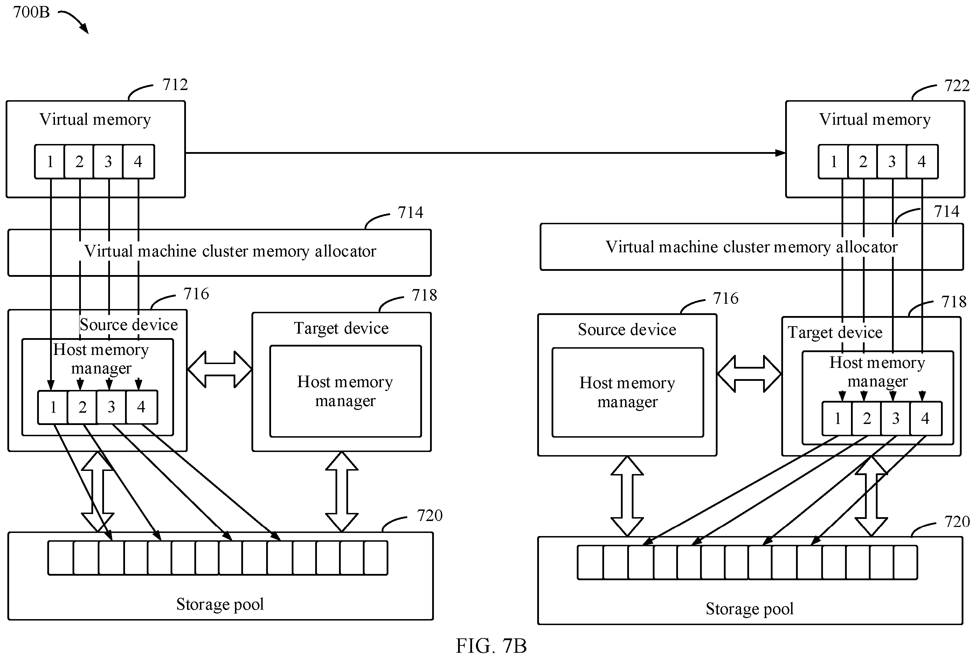

In some embodiments, when the target virtual machine runs, the target device first loads the status information to the target virtual machine. In this case, a status of the target virtual machine is the same as that of the source virtual machine. The target device may determine a virtual address that the target virtual machine needs to access, for example, a virtual address that an application or a system running in the virtual machine needs to access to obtain data. Then, the target device accesses the physical address corresponding to the virtual address by using the obtained address mapping of the source virtual machine. In this manner, fast and accurate access to the physical address corresponding to the virtual address can be implemented. A process of accessing the physical address based on the address mapping is further described with reference to FIG. 6A and FIG. 6B and FIG. 7A and FIG. 7B.

In some embodiments, if receiving a request for migrating the target virtual machine to another device, the target device needs to first collect status information of the target virtual machine. The status information includes current status information of the target virtual machine, for example, register data of a central processing unit of the target virtual machine, virtual machine configuration information, and a physical core or other information corresponding to the virtual machine. Then, the target device sends the status information of the target virtual machine to the another device. In this manner, virtual machine migration can be quickly implemented.

In some embodiments, when the target virtual machine migrates the target virtual machine to another device, the target device may send, to the another device, an address mapping corresponding to the target virtual machine. In this case, the target device first obtains the address mapping of the target virtual machine. The address mapping includes a mapping between a virtual address of the target virtual machine and a physical address of the target virtual machine. Then, the target device sends the address mapping of the target virtual machine to the another device. In this manner, a device that receives a virtual machine to be migrated can implement fast and accurate access to the physical address. Alternatively or additionally, if an instruction indicating that the corresponding virtual machine is running is received from a fourth device, running of the target virtual machine is stopped. Optionally, after the status information and/or the address mapping are/is sent, running of the target virtual machine is stopped.

The physical address of the virtual machine can be located on any suitable device. In an example, the physical address is located on the source device. In another example, the physical address is located on the target device. In still another example, the physical address is located on a third device in the device cluster that includes the source device and the target device. Alternatively or additionally, the physical address is located in a storage pool of the source device and the target device. The foregoing example is merely used to describe the present disclosure, but is not a specific limitation on the present disclosure.

In this manner, in a virtual machine live migration process, only the status information of the virtual machine needs to be transferred, and memory data of the virtual machine does not need to be transferred. This operation accelerates the virtual machine live migration, and reduces an amount of data to be migrated during virtual machine migration. In addition, because migration time is significantly reduced, reliability of live migration is improved, and user experience is improved.

The foregoing describes, with reference to FIG. 5, a virtual machine migration process according to some embodiments of this application. The following describes in detail a process of accessing the physical address based on the address mapping. The process is described with reference to FIG. 6A and FIG. 6B and FIG. 7A and FIG. 7B. FIG. 6A and FIG. 6B are diagrams of an example of virtual machine migration according to some embodiments of this application. FIG. 7A and FIG. 7B are diagrams of another example of virtual machine migration according to some embodiments of this application.

In some embodiments, the high-speed communication bus such as a CXL bus is used, and a plurality of devices support synchronous memory access to each other. In this scenario, memory for the virtual machine may be allocated on one, two, or more devices. An example with two devices is used. As shown in FIG. 6A and FIG. 6B, the physical address corresponding to the virtual address of the virtual machine is located in device memory of the source device and device memory of the target device.

The memory for the virtual machine is usually managed by using a paging mechanism. An address mapping between the virtual address and the physical address is managed and stored by using a page table. A storage page is usually divided into a plurality of different specifications such as 4 KB, 2 MB, or 1 GB. In this embodiment, 1 GB is used as an example. As shown in FIG. 6A, it is assumed that a size of virtual memory 602 of the virtual machine is 4 GB, 2 GB corresponds to local host memory managed by a host memory manager 606 on a source device 610, and 2 GB corresponds to remote host memory managed by a host memory manager 608 on a target device 612. A specific mapping relationship is shown in FIG. 6A, and the mapping relationship is implemented by a virtual machine cluster memory allocator 604. After the virtual machine is migrated from the source device 610 to the target device 612, as shown in FIG. 6B, the address mapping in virtual memory 614 for the target virtual machine needs to be determined based on the address mapping of the source virtual machine.

In some embodiments, a communication bus between a device cluster that includes the source device 610 and the target device 612 supports unified addressing between devices, and the address mapping corresponding to the source virtual machine may be directly used as the address mapping of the target virtual machine. For example, when the virtual machine cluster memory allocator 604 establishes an address mapping of a virtual machine, a physical address corresponding to the virtual address of the virtual machine may carry a device identifier, so that the communication bus can directly access the physical address. For example, the address mapping of the virtual machine may be: A virtual address of a page 1 corresponds to a physical address that includes an identifier of a source device and a host memory address on the source device, a virtual address of a page 2 corresponds to a physical address that includes an identifier of a source device and a host memory address on the source device, a virtual address of a page 3 corresponds to a physical address that includes an identifier of a target device and a host memory address on the target device, and a virtual address of a page 4 corresponds to a physical address that includes an identifier of a target device and a host memory address on the target device.

After obtaining the address mapping of the source virtual machine, the target device 612 determines, based on the physical address in the address mapping, whether the physical address is a local address of the target device 612. If the physical address is the local address, the physical address is directly accessed. If the physical address is not the local address, because the communication bus supports unified addressing between the devices, a communication bus interface may directly identify a device and a location on which the physical address is located, to directly remotely access the physical address through the bus. In this case, performing high-speed address mapping of the source virtual machine is not needed.

In some embodiments, a communication bus between a device cluster of the source device and a device cluster of the target device does not support unified addressing between devices. For ease of description, the address mapping of the source virtual machine is referred to as a first address mapping. Because the communication bus between the device cluster of the source device and the device cluster of the target device does not support unified addressing between the devices, in this case, a virtual address of the virtual memory 602 can be mapped only to a physical address of the source device 610. Because physical addresses on different devices may be allocated to the virtual machine, to implement address mapping in a case in which the communication bus does not support unified addressing between the devices, a physical address of another device needs to be first mapped to non-actual physical address space on the source device. Then, an actual physical address of the source device and a non-actual physical address corresponding to the another device are used to form an address mapping with the virtual address of the virtual machine. For ease of description, the actual physical address of the source device for the virtual machine and the non-actual physical address are collectively referred to as a source reference physical address. Therefore, the first address mapping of the virtual machine is an address mapping between the virtual address of the source virtual machine and the source reference physical address. To ensure that the actual physical address can be addressed, the source device further stores a second address mapping between the source reference physical address and an actual physical address that is for the source virtual machine and that is from each device. After obtaining the first address mapping, the target device further needs to obtain the second address mapping between the actual physical address of the source virtual machine and the source reference physical address. In addition, because the communication bus between the device cluster of the source device and the device cluster of the target device does not support unified addressing between the devices, the actual physical address that is for the source virtual machine and that is from each device needs to be mapped to a target reference physical address of the target virtual machine. Therefore, a third address mapping between the target reference physical address of the target device for the target virtual machine and the actual physical address is further determined at the target device. Next, the target device may further determine a correspondence between the source reference physical address and the target reference physical address by using the second address mapping and the third address mapping. Then, the first address mapping is updated based on the correspondence by replacing the source reference physical address in the first address mapping with the target reference physical address. After obtaining an updated first address mapping, when accessing the virtual address, the target device may determine the target reference physical address corresponding to the virtual address. In addition, the virtual machine cluster storage distributor may further determine a local address of the target device and a remote address of the target device. In this manner, when the communication bus between the device cluster of the source device and the device cluster of the target device does not support unified addressing between the devices, access to the physical address can be implemented only through high-speed address mapping, to reduce data to be migrated.

Furthermore, the target device 612 further needs to determine whether the target reference physical address is a local physical address of the target device. If the target reference physical address is the local physical address, the target device 612 directly accesses the target reference physical address. In this manner, quick access to the local physical address can be implemented. If the target reference physical address is not the local physical address, the target device 612 needs to determine, from the third address mapping between the target reference physical address of the target device for the target virtual machine and the actual physical address, an actual physical address corresponding to the target reference physical address, and then remotely access the actual physical address through the communication bus that does not support unified addressing between the devices. In this manner, a physical address on a remote device can be quickly accessed, thereby avoiding migration of the memory data in a virtual machine migration process.

In an example, the bus includes a bus that supports a compute express link protocol. In another example, the bus includes a bus that supports a remote direct memory access protocol. The foregoing example is merely used to describe the present disclosure, but is not a specific limitation on the present disclosure. A person skilled in the art may set any suitable bus based on a requirement.

The foregoing describes, with reference to FIG. 6A and FIG. 6B, an example of virtual machine migration according to some embodiments of this application. The following describes, with reference to FIG. 7A and FIG. 7B, another example of virtual machine migration according to some embodiments of this application.

**In** some embodiments, storage space of a computing device for a virtual machine is from a storage pool, and may be accessed through, for example, an RDMA communication bus, a CXL communication bus, or another high-speed communication bus. The storage pool may be independently deployed, or may be deployed in the device cluster. An example with two devices is used, as shown in FIG. 7A and FIG. 7B. In FIG. 7A, a storage pool of a source device 706 and a target device 708 supports shared access, for example, a read operation may be performed. An actual physical address corresponding to a virtual address in virtual memory 702 of the virtual machine is located in the storage pool 710 used by the source device 706 and the target device 708. In this case, a virtual machine cluster memory allocator 704 may use an address in the storage pool 710 as a physical address of the source device 706 and allocate the address to the virtual memory 702, to establish an address mapping of the virtual machine. Therefore, the source virtual machine may directly access the storage pool based on the address mapping in the virtual memory. For example, in the address mapping of the virtual machine, a page 1 in the virtual memory is mapped to a physical page on the source device, and the physical page on the source device is directly mapped to a page in the storage pool, which implements direct interconnection between the page in the storage pool and a page in the memory of the virtual machine. For example, the page 1 corresponds to a page in the storage pool. When the virtual machine is migrated to the target device, the target device may obtain an address mapping of the source virtual machine, and store the address mapping in the virtual machine memory 712. In this case, the target device may also obtain, based on the address mapping, an actual physical address in a storage pool corresponding to the virtual address for access. Therefore, the address mapping of the source virtual machine does not need to be adjusted.

In some embodiments, the storage pool of the source device and the target device does not support shared access. In this case, each device accesses only a physical address allocated by the storage pool to the device, and each device establishes a mapping between a local reference physical address and a physical address in the storage pool. When a virtual machine is established, an address mapping of the virtual machine is a correspondence between a virtual address of the virtual machine and the local reference physical address. As shown in FIG. 7B, a page 1 in the virtual memory 712 is mapped to a page 1 in memory of a source device 716, and the page 1 on the source device 716 is mapped to a physical address in the storage pool 720. Therefore, an address mapping between the source reference physical address and an actual physical address in the storage pool further exists on the source device 716. A target device 718 needs to obtain the address mapping between the source reference physical address and the actual physical address in the storage pool. Then, the address mapping between the target reference physical address of the target device for the target virtual machine and the actual physical address in the storage pool is re-established. In addition, the address mapping between the source reference physical address and the target reference physical address further needs to be determined, so that the address mapping of the virtual machine is updated by using the address correspondence to replace the source reference physical address with the target reference physical address, to implement a mapping between the virtual address in the virtual memory 722 and the target reference physical address. When the virtual address is accessed, the target reference physical address corresponding to the virtual address may be determined based on an updated address mapping. Next, the target device determines, based on the address mapping between the target reference physical address of the target device and the actual physical address in the storage pool, an actual physical address corresponding to the target reference physical address. The actual physical address located in the storage pool is then accessed.

In some embodiments, a part of a physical address of the virtual machine may be located in memory of the computing device, and the other part may be located in the storage pool. An access process may be implemented by combining the solutions described in FIG. 6A and FIG. 6B and FIG. 7A and FIG. 7B.

In this manner, in a virtual machine live migration process, only the status information of the virtual machine needs to be transferred, and memory data does not need to be transferred, thereby accelerating virtual machine live migration, and reducing an amount of data that needs to be migrated during virtual machine migration. Because migration time is significantly reduced, reliability of live migration is improved, and user experience is improved.

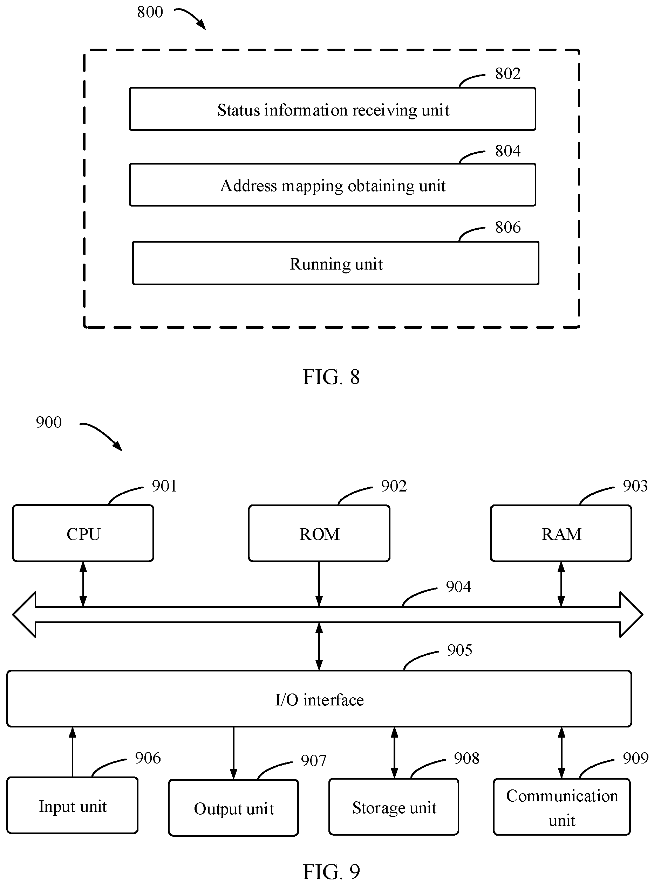

FIG. 8 further shows a block diagram of an apparatus 800 for migrating a virtual machine according to an embodiment of this application. The apparatus 800 may include a plurality of modules, to perform corresponding steps in the process 500 discussed in FIG. 5. As shown in FIG. 8, the apparatus 800 includes: a status information receiving unit 802, configured to receive, at a target device, status information of a source virtual machine from a source device; an address mapping obtaining unit 804, configured to obtain an address mapping corresponding to the source virtual machine, where the address mapping includes a mapping between a virtual address of the source virtual machine and a physical address of the source virtual machine; and a running unit 806, configured to implement, based on the status information and the address mapping, virtual machine migration by running, at the target device, a target virtual machine that accesses the physical address.

In some embodiments, the status information includes at least one of the following: register data of a central processing unit, virtual machine configuration information, or a physical core corresponding to the virtual machine.

In some embodiments, the address mapping obtaining unit 804 includes: an address mapping receiving unit, configured to receive the address mapping from the source device; or an address mapping searching unit, configured to search for, at the target device, the address mapping corresponding to the source virtual machine.

In some embodiments, the running unit 806 includes: a loading unit, configured to load the status information to the target virtual machine; a virtual address determining unit, configured to determine a virtual address accessed by the target virtual machine; and a physical address access unit, configured to access, based on the address mapping, a physical address corresponding to the virtual address.

In some embodiments, a communication bus between a device cluster of the source device and a device cluster of a target device supports unified addressing between devices. The physical address access unit includes: a local address determining unit, configured to determine whether the physical address is a local address of the target device; a first local access unit, configured to: if the physical address is the local address, locally access the physical address; and a first remote access unit, configured to: if the physical address is not the local address, remotely access the physical address through the communication bus that supports unified addressing between the devices.

In some embodiments, the address mapping is a first address mapping, and the physical address in the first address mapping is a source reference physical address of the source device. A communication bus between a device cluster of the source device and a device cluster of the target device does not support unified addressing between devices, or the physical address is located in a storage pool that does not support shared access of the source device and the target device. The physical address access unit includes: a second address mapping obtaining unit, configured to obtain a second address mapping between an actual physical address of the source virtual machine and the source reference physical address; a third address mapping determining unit, configured to determine a third address mapping between a target reference physical address of the target device for the target virtual machine and the actual physical address; a fourth address mapping determining unit, configured to determine, based on the second address mapping and the third address mapping, a fourth address mapping between the source reference physical address and the target reference physical address; and an address mapping update unit, configured to update the first address mapping based on the fourth address mapping by replacing the source reference physical address in the first address mapping with the target reference physical address; and target reference physical address determining unit, configured to determine, based on an updated first address mapping, the target reference physical address corresponding to the virtual address.

In some embodiments, when the communication bus between the device cluster of the source device and the device cluster of the target device does not support unified addressing between the devices, the physical address access unit further includes: a local physical address determining unit, configured to determine whether the target reference physical address is a local physical address of the target device; and a target reference physical address access unit, configured to: if the target reference physical address is the local physical address, locally access the target reference physical address.

In some embodiments, the physical address access unit further includes: a first actual physical address determining unit, configured to: if the target reference physical address is not the local physical address, determine, based on the third address mapping, an actual physical address corresponding to the target reference physical address; and an actual physical address remote access unit, configured to remotely access the actual physical address through the communication bus that does not support unified addressing between the devices.

In some embodiments, the bus includes either of the following: a bus that supports a compute express link protocol or a bus that supports a remote direct memory access protocol.

In some embodiments, when the physical address is located in the storage pool that is for the source device and the target device and that does not support shared access, the physical address access unit further includes: a second actual physical address determining unit, configured to determine, based on the third address mapping, the actual physical address corresponding to the target reference physical address; and an actual physical address access unit, configured to access the actual physical address located in the storage pool.

In some embodiments, the physical address is located in at least one of the following devices: the source device, the target device, a third device in the device cluster that includes the source device and the target device, or a storage pool of the source device and the target device.

In some embodiments, the status information is first status information, and the apparatus 800 further includes: a second status information collection unit, configured to: if a request for migrating the target virtual machine to a fourth device is received, collect second status information of the target virtual machine; and a sending unit, configured to send the second status information to the fourth device.

In some embodiments, the apparatus 800 further includes: a fifth address mapping obtaining unit, configured to obtain a fifth address mapping corresponding to the target virtual machine, where the fifth address mapping includes a mapping between a virtual address of the target virtual machine and a physical address of the target virtual machine; and a fifth address mapping sending unit, configured to send the fifth address mapping to the fourth device.

In some embodiments, the apparatus 800 further includes a stopping unit, configured to: if an instruction indicating that the corresponding virtual machine is running is received from the fourth device, stop running of the source virtual machine.

FIG. 9 is a block diagram of an example device 900 that may be configured to implement an embodiment of this application. For example, according to the computing devices 104, 106, and 108 in FIG. 1, the source device 210 and the target device 212 in FIG. 2A to FIG. 2C, the source device 308 and the target device 310 in FIG. 3, the source device 410 and the target device 412 in FIG. 4, the source device 610 and the target device 612 in FIG. 6A and FIG. 6B, the source device 706 and the target device 708 in FIG. 7A and FIG. 7B in embodiments of this application may be implemented by an example device 900. As shown in the figure, the device 900 includes a central processing unit (CPU) 901, which may perform various appropriate actions and processing according to computer program instructions stored in a read-only memory (ROM) 902 or computer program instructions loaded from a storage unit 908 to a random access memory (RAM) 903. The RAM 903 may further store various programs and data required for an operation of the device 900. The CPU 901, the ROM 902, and the RAM 903 are connected to each other through a bus 904. An input/output (I/O) interface 905 is also connected to the bus 904.

A plurality of components in the device 900 are connected to the I/O interface 905, and include: an input unit 906, for example, a keyboard or a mouse; an output unit 907, for example, various types of displays or speakers; a storage unit 908, for example, a magnetic disk or an optical disc; and a communication unit 909, for example, a network adapter, a modem, or a wireless communication transceiver. The communication unit 909 allows the device 900 to exchange information/data with another device over a computer network such as the Internet and/or various telecommunication networks.

The processes and processing described above, for example, the process 500, may be performed by the CPU 901. For example, in some embodiments, the process 500 may be implemented as a computer software program, and the computer software program is tangibly included in a machine-readable medium, for example, the storage unit 908. In some embodiments, some or all of computer programs may be loaded and/or installed on the device 900 via the ROM 902 and/or the communication unit 909. When the computer program is loaded into the RAM 903 and executed by the CPU 901, one or more actions of the process 500 described above may be performed.

This application may be a method, an apparatus, a system, a chip, and/or a computer program product. The chip may include a processing unit and a communication interface, and the processing unit may process a program instruction received from the communication interface. The computer program product may include a computer-readable storage medium, having computer-readable program instructions thereon for performing various aspects of this application.

The computer-readable storage medium may be a tangible device that can retain and store instructions used by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing instructions on the punched card or the groove protrusion structure, and any suitable combination of the foregoing. The computer-readable storage medium used herein is not to be construed as a transient signal, such as a radio wave or another freely propagating electromagnetic wave, an electromagnetic wave propagating through a waveguide or another transmission medium (such as a light pulse through an optical fiber cable), or an electrical signal transmitted through a wire.

The computer-readable program instructions described herein may be downloaded from the computer-readable storage medium to respective computing/processing devices or to an external computer or external storage device through a network, for example, the Internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this application may be an assembly instruction, an instruction set architecture (ISA) instruction, a machine instruction, a machine-related instruction, microcode, a firmware instruction, status setting data, or source code or target code written in any combination of one or more programming languages. The programming languages include an object-oriented programming language such as Smalltalk and C++, and a conventional procedural programming language such as a "C" language or a similar programming language. The computer-readable program instructions may be executed entirely on a user computer, may be executed partially on a user computer as a standalone software package, may be executed partially on a user computer and partially on a remote computer, or may be executed entirely on a remote computer or a server. When a remote computer is involved, the remote computer may be connected to a user computer through any type of network, including a local area network (LAN) or a wide area network (WAN), or may be connected to an external computer (for example, through the Internet provided by an Internet service provider). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, to implement the various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processing unit of a general-purpose computer, a special-purpose computer, or another programmable data processing apparatus to produce a machine, so that the instructions, when executed by the processing unit of the computer or the another programmable data processing apparatus, create an apparatus for implementing functions/actions specified in one or more blocks in the flowcharts and/or block diagrams. Alternatively, these computer-readable program instructions may be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/actions specified in the one or more blocks of the flowcharts and/or block diagrams.

Alternatively, the computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement functions/actions specified in one or more blocks of the flowcharts and/or block diagrams.

The flowcharts and block diagrams in the accompanying drawings show the system architecture, function, and operation of possible implementations of systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved. It should also be noted that each block in the block diagrams and/or flowcharts, and the combination of the blocks in the block diagrams and/or flowcharts may be implemented by a special-purpose hardware-based system that performs a specified function or action, or may be implemented by a combination of special-purpose hardware and computer instructions.

Implementations of this application are described above. The foregoing descriptions are examples, not exhaustive, and not limited to the foregoing disclosed implementations. Many modifications and variations are apparent to a person of ordinary skill in the art without departing from the scope and spirit of the described implementations. Selection of terms used in this specification is intended to best explain implementation principles, actual application or improvements to technologies in the market, or to enable another person of ordinary skill in the art to understand the implementations disclosed in this specification.

## Claims

1. A method for migrating a virtual machine, comprising:
receiving, at a target device, status information of a source virtual machine from a source device;
obtaining an address mapping corresponding to the source virtual machine, wherein the address mapping comprises a mapping between a virtual address of the source virtual machine and a physical address of the source virtual machine; and
implementing virtual machine migration based on the status information and the address mapping by running, at the target device, a target virtual machine that accesses the physical address.

2. The method according to claim 1, wherein the status information comprises at least one of the following: register data of a central processing unit, virtual machine configuration information, and a physical core corresponding to the virtual machine.

3. The method according to claim 1, wherein obtaining the address mapping comprises:
receiving the address mapping from the source device; or
searching for, at the target device, the address mapping corresponding to the source virtual machine.

4. The method according to claim 1, wherein running the target virtual machine comprises:
loading the status information to the target virtual machine;
determining the virtual address accessed by the target virtual machine; and
accessing, based on the address mapping, the physical address corresponding to the virtual address.

5. The method according to claim 4, wherein a communication bus between a device cluster of the source device and a device cluster of the target device supports unified addressing between devices, and accessing the physical address comprises:
determining whether the physical address is a local address of the target device; and
if the physical address is the local address, locally accessing the physical address; and
if the physical address is not the local address, remotely accessing the physical address through the communication bus that supports unified addressing between the devices.

6. The method according to claim 4, wherein the address mapping is a first address mapping, and the physical address in the first address mapping is a source reference physical address of the source device; a communication bus between a device cluster of the source device and a device cluster of the target device does not support unified addressing between devices, or the physical address is located in a storage pool, and the storage pool does not support shared access of the source device and the target device; and accessing the physical address comprises:
obtaining a second address mapping between an actual physical address of the source virtual machine and the source reference physical address;
determining a third address mapping between a target reference physical address of the target device for the target virtual machine and the actual physical address;
determining, based on the second address mapping and the third address mapping, a fourth address mapping between the source reference physical address and the target reference physical address; and
updating the first address mapping based on the fourth address mapping by replacing the source reference physical address in the first address mapping with the target reference physical address; and
determining, based on an updated first address mapping, the target reference physical address corresponding to the virtual address.

7. The method according to claim 6, wherein when the communication bus between the device cluster of the source device and the device cluster of the target device does not support unified addressing between the devices, accessing the physical address further comprises:
determining whether the target reference physical address is a local physical address of the target device; and
if the target reference physical address is the local physical address, locally accessing the target reference physical address.

8. The method according to claim 7, wherein accessing the physical address further comprises:
if the target reference physical address is not the local physical address, determining, based on the third address mapping, an actual physical address corresponding to the target reference physical address; and
remotely accessing the actual physical address through the communication bus that does not support unified addressing between the devices.

9. The method according to claim 5 or 6, wherein the bus comprises either of the following: a bus that supports a compute express link protocol or a bus that supports a remote direct memory access protocol.

10. The method according to claim 6, wherein when the physical address is located in the storage pool, accessing the physical address further comprises:
determining, based on the third address mapping, an actual physical address corresponding to the target reference physical address; and
accessing the actual physical address located in the storage pool.

11. The method according to any one of claims 1 to 5, wherein the physical address is located in at least one of the following devices: the source device, the target device, a third device in the device cluster that comprises the source device and the target device, or a storage pool of the source device and the target device.

12. The method according to claim 1, wherein the status information is first status information, and the method further comprises:
if a request for migrating the target virtual machine to a fourth device is received, collecting second status information of the target virtual machine; and
sending the second status information to the fourth device.

13. The method according to claim 12, further comprising:
obtaining a fifth address mapping corresponding to the target virtual machine, wherein the fifth address mapping comprises a mapping between a virtual address of the target virtual machine and a physical address of the target virtual machine; and
sending the fifth address mapping to the fourth device.

14. The method according to claim 12 or 13, further comprising:
if an instruction indicating that the corresponding virtual machine is running is received from the fourth device, stopping running of the target virtual machine.

15. An apparatus for migrating a virtual machine, wherein the apparatus comprises:
a status information receiving unit, configured to receive, at a target device, status information of a source virtual machine from a source device;
an address mapping obtaining unit, configured to obtain an address mapping corresponding to the source virtual machine, wherein the address mapping comprises a mapping between a virtual address of the source virtual machine and a physical address of the source virtual machine; and
a running unit, configured to implement, based on the status information and the address mapping, virtual machine migration by running, at the target device, a target virtual machine that accesses the physical address.

16. An electronic device, comprising:
at least one computing unit; and
at least one memory that is coupled to the at least one computing unit and that stores instructions for execution by the at least one computing unit, wherein when the instructions are executed by the at least one computing unit, the device is enabled to perform the method according to any one of claims 1 to 14.

17. A computer-readable storage medium, storing a computer program, wherein when the program is performed by a processor, the method according to any one of claims 1 to 14 is implemented.

18. A computer program product, comprising computer-executable instructions, wherein when the computer-executable instructions are executed by a processor, the method according to any one of claims 1 to 14 is implemented.
